# EUROPEAN PATENT APPLICATION

(11) **EP 4 397 490 A1**
(43) Date of publication of application: **10.07.2024**
(21) Application number: 22864182.5
(22) Date of filing: 05.08.2022
(51) Int. Cl.: B32B 27/32, B65D 65/40

(54) **MULTILAYER FILM, PACKAGING MATERIAL, AND PACKAGE**

(30) Priority: 01.09.2021 JP 2021142123
(71) Applicant: Toppan Holdings Inc., Tokyo 110-0016 (JP)
(72) Inventor: HAMADA, Daisuke, Tokyo 110-0016 (JP); OOKI, Tomoko, Tokyo 110-0016 (JP); MINEKISHI, Takayuki, Tokyo 110-0016 (JP)
(74) Representative: TBK
(86) International application number: PCT/JP2022/030163
(87) International publication number: WO 2023/032596

(57) **Abstract**

The present disclosure relates to a multilayer film including: a first layer, which is a heat seal layer, containing 70 to 10% by mass of a propylene homopolymer (A) and 30 to 90% by mass of a propylene-based resin (B) having a melting point of 132 to 150°C; and a second layer containing a propylene-ethylene block copolymer (C) and an ethylene-propylene copolymer elastomer (D).

## Description

### Technical Field

The present invention relates to a multilayer film, a packaging material, and a package. More particularly, the invention relates to a polypropylene-based multilayer sealant film which is excellent in terms of heat resistance, cold impact resistance, and low-temperature sealability, can be suitably used as a sealant film for a packaging bag even under harsh treatments such as a boiling water treatment and a retort treatment, and can be suitably used even for a packaging material composed of the same polypropylene-based material, and to a packaging material and a packaging bag, which are obtained by using the polypropylene-based multilayer sealant film.

### Background Art

Since polypropylene-based films have excellent rigidity and heat resistance and are inexpensive, polypropylene-based films are sometimes used as sealant films in various packaging materials for food packaging and the like.

In Patent Literature 1, a polypropylene-based composite film composed of three layers, in which an intermediate layer is formed of a polypropylene-ethylene block copolymer, and both surface layers are formed of a propylene-based random copolymer, has been suggested.

### Citation List

### Patent Literature

Patent Literature 1: Japanese Unexamined Patent Publication No. 2017-132186

### Summary of Invention

### Technical Problem

Conventionally, polypropylene-based multilayer films have been required to have heat resistance that can withstand a retort treatment or the like, in which disinfection and sterilization are carried out by performing a pressurization treatment at a high temperature of, for example, 120 to 135°C, and cold impact resistance that will not cause bag breaking even when stored at a low temperature. In addition to that, in recent years, films of various materials have been used as substrate films as a result of diversification of packaging materials, and polypropylene-based multilayer sealant films are required to have low-temperature sealing properties. However, it is the current situation that in conventional polypropylene-based multilayer sealant films, it is difficult to achieve excellent heat resistance, cold impact resistance, and low-temperature sealability in a well-balanced manner.

The present invention was achieved in view of the above-described circumstances, and it is an object of the invention to provide a polypropylene-based multilayer film capable of achieving excellent heat resistance, cold impact resistance, and low-temperature sealability at a high level in a well-balanced manner. Another object of the present invention is to provide a packaging material and a package obtainable by using the multilayer film.

### Solution to Problem

The inventors of the present invention conducted a thorough investigation in order to solve the above-described problems, and as a result, the inventors found that it is important to allow a heat seal layer to include a mixture of predetermined amounts of a propylene homopolymer (A) and a propylene-based resin (B) having a melting point of 132 to 150°C, and to laminate this on a layer including a propylene-ethylene block copolymer (C) and an ethylene-propylene copolymer elastomer (D), thus completing the present invention.

A multilayer film according to an aspect of the present invention includes: a first layer, which is a heat seal layer, containing 70 to 10% by mass of a propylene homopolymer (A) and 30 to 90% by mass of a propylene-based resin (B) having a melting point of 132 to 150°C; and a second layer containing a propylene-ethylene block copolymer (C) and an ethylene-propylene copolymer elastomer (D), in this order.

In the multilayer film, the first layer contains the propylene homopolymer (A) and the propylene-based resin (B) having a melting point of 132 to 150°C at a specific quantity ratio, and the second layer contains a propylene-ethylene block copolymer (C) and an ethylene-propylene copolymer elastomer (D). As a result, excellent cold impact resistance and low-temperature sealability can be exhibited while maintaining heat resistance. Such a combined effect cannot be obtained in a case where a propylene-ethylene block copolymer is used in an intermediate layer, and a propylene-based random copolymer is used in an outer layer (for example, the above-described Patent Literature 1), and the combined effect is an effect suitable for retort treatment applications in particular.

According to an embodiment, the second layer may contain 90 to 50% by mass of the propylene-ethylene block copolymer (C) and 10 to 50% by mass of the ethylene-propylene copolymer elastomer (D). As a result, more excellent impact resistance is likely to be obtained even during low-temperature storage.

According to an embodiment, a thickness of the first layer may be 8 to 30% based on a thickness of the multilayer film. As a result, low-temperature sealability is likely to be obtained while maintaining cold impact resistance.

According to an embodiment, the multilayer film may be a multilayer film including the above-described first layer and second layer, and a third layer containing a propylene homopolymer (A) and a propylene-based resin (B) having a melting point of 132 to 150°C, in this order. As a result, distortion and warpage of the multilayer film are easily controlled.

According to an embodiment, a total thickness of the first layer and the third layer may be 16 to 42% based on the thickness of the multilayer film. As a result, low-temperature sealability is likely to be obtained while maintaining cold impact resistance.

According to an embodiment, a thickness of the second layer may be 20 µm or more. As a result, the cold impact resistance of the film is easily maintained.

A packaging material according to an aspect of the present invention includes the above-described multilayer film and a substrate.

According to an embodiment, the substrate may be a biaxially stretched polypropylene film.

A package according to an aspect of the present invention is formed into a bag from the above-described packaging material.

### Advantageous Effects of Invention

According to the present invention, a polypropylene-based multilayer film capable of achieving excellent heat resistance, cold impact resistance, and low-temperature sealability at a high level in a well-balanced manner, can be provided. That is, according to the present invention, a polypropylene-based multilayer film that is excellent in terms of heat resistance that can withstand a retort treatment and the like, in which a pressurization treatment is performed at a high temperature of 120 to 135°C to perform disinfection and sterilization, cold impact resistance that does not cause bag breaking even during low-temperature storage, and low-temperature sealability. In addition, according to the present invention, a packaging material and a package obtainable by using the multilayer film can be provided.

### Brief Description of Drawings

FIG. 1 is a cross-sectional view of a multilayer film according to an embodiment of the present invention.
FIG. 2 is a cross-sectional view of the multilayer film according to another embodiment of the present invention.
FIG. 3 is a cross-sectional view of a packaging material according to an embodiment of the present invention.
FIG. 4 is a cross-sectional view of the packaging material according to another embodiment of the present invention.

### Description of Embodiments

### <Multilayer film>

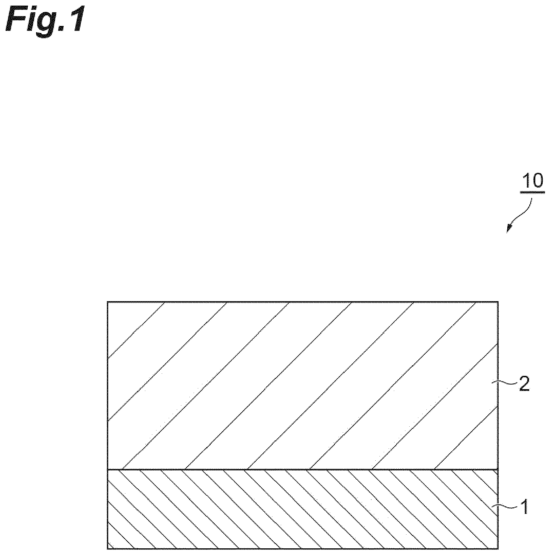

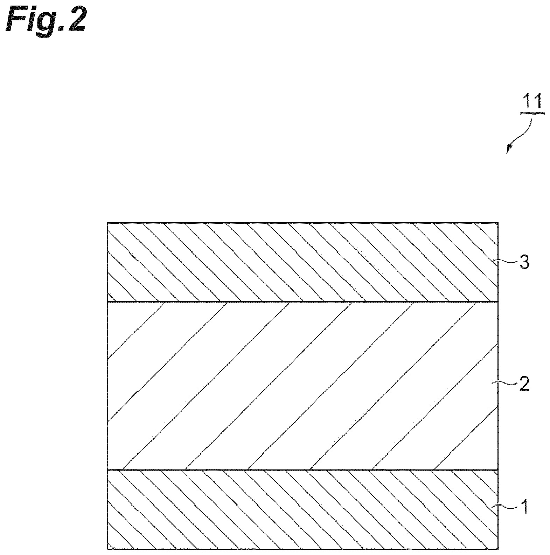

FIG. 1 is a cross-sectional view of a multilayer film according to an embodiment of the present invention. The multilayer film 10 includes a first layer 1 and a second layer 2 in this order. FIG. 2 is a cross-sectional view of the multilayer film according to another embodiment of the present invention. The multilayer film 11 includes a first layer 1, a second layer 2, and a third layer 3 in this order. The multilayer film can be used as a polypropylene-based unstretched sealant film.

### [First layer]

The first layer contains a propylene homopolymer (A) and a propylene-based resin (B) having a melting point of 132 to 150°C. By using a propylene homopolymer (A) having a high melting point and a propylene-based resin (B) having a melting point moderately lower than the propylene homopolymer (A) in combination, both excellent heat resistance and heat sealability can be achieved. The first layer is a heat seal layer (seal layer), and in a case where the multilayer film further includes a third layer, the first layer can be said to be an outer layer (first outer layer).

### (Propylene homopolymer (A))

The propylene homopolymer (A) can be obtained by, for example, a method of homopolymerizing propylene by using a Ziegler-Natta type catalyst, a metallocene catalyst, or a half-metallocene catalyst. As the first layer contains a propylene homopolymer (A), the first layer can impart excellent heat resistance. The melting point of the propylene homopolymer (A) is higher than the melting point of the propylene-based resin (B).

As the propylene homopolymer (A), one having a melting start temperature of 150°C or higher and a melting point of 155°C or higher when subjected to differential scanning calorimetry (JIS K 7121), can be used. A propylene homopolymer (A) having both the melting start temperature and the melting point within these ranges has excellent heat resistance, and for example, after performing a retort treatment at a high temperature, fusion is not likely to occur on the inner surface of a packaging bag.

As the propylene homopolymer (A), a polymer having a melt flow rate (MFR: ISO 1133) (temperature 230°C, load 2.16 kg) in the range of 2.0 to 7.0 g/10 minutes can be used. When the melt flow rate is equal to or more than the lower limit value, the load on the extruder during molding processing is reduced, the processing speed is less likely to decrease, and excellent productivity is likely to be maintained. In addition, when the melt flow rate is equal to or less than the upper limit value, the first layer is likely to have excellent impact resistance.

### (Propylene-based resin (B))

As the propylene-based resin (B), a resin having a melting point in the range of 132 to 150°C when subjected to differential scanning calorimetry (JIS K 7121) can be used. By using a propylene-based resin having a melting point within this range, excellent heat resistance and excellent low-temperature sealability can be achieved in a well-balanced manner. From this viewpoint, the melting point may be 135 to 145°C. Incidentally, the melting point of the propylene-based resin (B) after forming the first layer can be measured by, for example, separating the first layer by a high-temperature LC method of using graphite carbon as an adsorbent material and measuring the melting point of each layer.

The ethylene content of the propylene-based resin (B) may be 6% by mass or less. When the ethylene content is equal to or less than the upper limit value, heat resistance is not excessively decreased while maintaining low-temperature sealability, and fusion on the inner surface of a packaging bag after a retort treatment can be suppressed. From this viewpoint, the ethylene content may be 5.5% by mass or less, or may be 4.5% by mass or less. The lower limit of the ethylene content is not particularly limited; however, from the viewpoint of low-temperature sealability, the lower limit can be set to 3% by mass.

The ethylene content of the propylene-based resin (B) can be measured by the ethylene content quantification method (IR method) as described on pages 412 to 413 of the Polymer Analysis Handbook (May 10, 2013, third impression) edited by the Polymer Analysis Council of the Japan Society for Analytical Science.

Examples of the propylene-based resin (B) include a propylene-ethylene random copolymer. Regarding the propylene-ethylene random copolymer, the production method is not particularly limited; however, for example, the propylene-ethylene random copolymer can be obtained by copolymerizing ethylene as a co-monomer into a main monomer composed of propylene, by using a Ziegler-Natta type catalyst, a metallocene catalyst, or a half-metallocene catalyst. By using a propylene-ethylene random copolymer, a multilayer film having more excellent transparency can be obtained.

The first layer contains 70 to 10% by mass of the propylene homopolymer (A) and 30 to 90% by mass of the propylene-based resin having a melting point of 132 to 150°C. When the content of the propylene homopolymer (A) is 10% by mass or more, excellent heat resistance can be maintained. From this viewpoint, the content may be 15% by mass or more, or may be 20% by mass or more. When the content of the propylene homopolymer (A) is 70% by mass or less, that is, when the content of the propylene-based resin (B) having a melting point of 132 to 150°C is at least 30% by mass or more, excellent low-temperature sealability can be exhibited. From this viewpoint, the content of the propylene homopolymer (A) may be 65% by mass or less, or may be 60% by mass or less. From the above-described viewpoint, the content of the propylene-based resin (B) having a melting point of 132 to 150°C may be 35 to 85% by mass, or may be 40 to 80% by mass.

### [Second layer]

The second layer contains a propylene-ethylene block copolymer (C) and an ethylene-propylene copolymer elastomer (D). In a case where the multilayer film further includes a third layer, the second layer can be referred to as intermediate layer.

### (Propylene-ethylene block copolymer (C))

The propylene-ethylene block copolymer (C) is a copolymer obtained by producing a propylene polymer (C1) in a first step and then producing an ethylene-propylene copolymer (C2) by gas-phase polymerization in a second step. The propylene-ethylene block copolymer (C) is not a block copolymer in which a propylene polymer terminal and an ethylene-propylene copolymer terminal are bonded together, but is a kind of blend copolymer. As the second layer contains the propylene-ethylene block copolymer (C), excellent cold impact resistance is likely to be obtained.

As the propylene-ethylene block copolymer (C), one having a melt flow rate (MFR: ISO 1133) (temperature 230°C, load 2.16 kg) in the range of 0.5 to 2.5 g/10 minutes can be used. When the melt flow rate is equal to or more than the lower limit value, the load on the extruder during molding processing is reduced, the processing speed is less likely to decrease, and excellent productivity is likely to be maintained. When the melt flow rate is equal to or less than the upper limit value, the second layer is likely to obtain excellent cold impact resistance.

The propylene-ethylene block copolymer (C) may contain 90 to 60% by mass of the propylene polymer (C1) and 10 to 40% by mass of the ethylene-propylene copolymer (C2). By having each of the components in this range, excellent cold impact resistance is likely to be obtained. From this viewpoint, the propylene-ethylene block copolymer (C) may contain 87.5 to 65% by mass of the propylene polymer (C1) and 12.5 to 35% by mass of the ethylene-propylene copolymer (C2), or may contain 85 to 70% by mass of the propylene polymer (C1) and 15 to 30% by mass of the ethylene-propylene copolymer (C2).

The ethylene content of the ethylene-propylene copolymer (C2), which is included in the propylene-ethylene block copolymer (C), is not particularly limited; however, the ethylene content can be set to the range of 20 to 40% by mass. When the ethylene content is equal to or less than the upper limit value, tackiness of the product can be suppressed, the product is less likely to be contaminated by tack during production, and excellent productivity is likely to be maintained. When the ethylene content is equal to or more than the lower limit value, excellent cold impact resistance is likely to be obtained.

### (Ethylene-propylene copolymer elastomer (D))

The ethylene-propylene copolymer elastomer (D) can be obtained by, for example, a slurry polymerization method carried out in the presence of an inert hydrocarbon such as hexane, heptane, or kerosene, or a liquefied α-olefin solvent such as propylene; a gas phase polymerization method without a solvent; or the like. Specifically, the ethylene-propylene copolymer elastomer (D) is obtained by using a known multi-stage polymerization method. That is, the ethylene-propylene copolymer elastomer (D) is a polymerized high rubber-containing polypropylene-based resin that can be obtained by polymerizing propylene and/or a propylene-α-olefin polymer in a reactor in a first stage, and then copolymerizing propylene with an α-olefin in a reactor in a second stage. As the second layer contains the ethylene-propylene copolymer elastomer (D), more excellent cold impact resistance is likely to be obtained.

As the ethylene-propylene copolymer elastomer (D), one having a melt flow rate (MFR: ISO 1133) (temperature 230°C, load 2.16 kg) in the range of 0.5 to 3.5 g/10 minutes can be used. When the melt flow rate is equal to or more than the lower limit value, the load on the extruder during molding processing is reduced, the processing speed is less likely to decrease, and excellent productivity is likely to be maintained. When the melt flow rate is equal to or less than the upper limit value, the compatibility between the propylene-ethylene block copolymer (C) and the ethylene-propylene copolymer elastomer (D) is favorable, and transparency and impact resistance are less likely to deteriorate.

As the ethylene-propylene copolymer elastomer (D), one having a mass ratio of the propylene content and the ethylene content (propylene content/ethylene content) in the range of 1.5 to 4 can be used. When the mass ratio is in the above-described range, excellent cold impact resistance is likely to be obtained.

The second layer may contain 90 to 50% by mass of the propylene-ethylene block copolymer (C) and 10 to 50% by mass of the ethylene-propylene copolymer elastomer (D). When the content of the propylene-ethylene block copolymer (C) is 50% by mass or more, excellent heat resistance is likely to be maintained. From this viewpoint, the content may be 60% by mass or more, or may be 70% by mass or more. When the content of the propylene-ethylene block copolymer (C) is 90% by mass or less, that is, when the content of the ethylene-propylene copolymer elastomer (D) is at least 10% by mass or more, excellent cold impact resistance can be exhibited. From this viewpoint, the content of the propylene-ethylene block copolymer (C) may be 87.5% by mass or less, or may be 85% by mass or less. From the above-described viewpoint, the content of the ethylene-propylene copolymer elastomer (D) may be 12.5 to 40% by mass or may be 15 to 30% by mass.

### [Third layer]

The third layer contains the propylene homopolymer (A) and the propylene-based resin (B) having a melting point of 132 to 150°C, which have been mentioned in regard to the first layer. By providing the third layer, distortion and curling of the multilayer film are easily suppressed. The third layer can be referred to as an outer layer (second outer layer).

The blending ratio of the propylene homopolymer (A) and the propylene-based resin (B) Having a melting point of 132 to 150°C in the third layer is not particularly limited; however, from the viewpoint of suppressing film curling after film molding, it is preferable that the blending ratio is a blending ratio similar to that of the first layer.

### [Thickness of layers]

The thickness of the multilayer film is not particularly limited as long as, for example, the thickness is in a range that can be used as a film for packaging material; however, in a case where the film is too thick, it will be a disadvantage in terms of cost. For this reason, the thickness of the multilayer film can be set to 100 µm or less, or may be 50 to 70 µm.

The thickness of the first layer may be 8 to 30% based on the thickness of the multilayer film. When the proportion of the thickness of the first layer is equal to or more than the lower limit value, excellent low-temperature sealability is likely to be obtained, and when the proportion of the thickness is equal to or less than the upper limit value, a decrease in the heat seal strength of the film can be suppressed, while practical usability is likely to be obtained. From this viewpoint, the proportion of the thickness of the first layer may be 10 to 25% or may be 10 to 15%.

The thickness of the second layer may be 20 µm or more. In this way, cold impact resistance of the film is maintained, and bag breaking is less likely to occur even during low-temperature storage. From this viewpoint, the thickness of the second layer may be 25 µm or more, or may be 30 µm or more. The upper limit value of the thickness of the second layer is not particularly limited; however, since it is disadvantageous in terms of cost, the upper limit value can be set to 50 µm.

When providing the third layer, the total thickness of the first layer and the third layer may be 16 to 42% based on the thickness of the multilayer film. When the proportion of the total thickness is equal to or more than the lower limit value, excellent low-temperature sealability is likely to be obtained, and when the proportion of the total thickness is equal to or less than the upper limit value, a decrease in the heat seal strength of the film can be suppressed, while practical usability is likely to be obtained. From this viewpoint, the proportion of the total thickness of the first layer and the third layer may be 20 to 35%, or may be 20 to 30%.

### <Method for producing multilayer film>

The method for producing a multilayer film is not particularly limited, and it is possible to use any known method. Examples of a method for thermoforming processing include a melt-kneading method of using a general mixing machine such as a single screw extruder, a twin screw extruder, or a multi-screw extruder; and a method of mixing by dissolving or dispersing each component and then removing the solvent by heating. When workability is considered, a single screw extruder or a twin screw extruder can be used. In the case of using a single-screw extruder, examples of the screw include a full flight screw, a screw with a mixing element, a barrier flight screw, and a fluted screw, and these can be used without particular limitation. As a twin screw kneading apparatus, a co-rotating twin screw extruder, a counter-rotating twin screw extruder, or the like can be used, and as the screw shape, a full flight screw, a kneading disk type, or the like can be used without particular limitation.

In the above-described method, it is possible to use a method of melting using a single-screw extruder, a twin-screw extruder, or the like and then forming the multilayer film a film using a T-die through a feed block or a multi-manifold.

The obtained multilayer film may be subjected to a surface modification treatment that improves the suitability for subsequent processes as appropriate, if necessary. For example, in order to improve the printing suitability at the time of using a single film, or to improve the lamination suitability at the time of using a laminated film, the printing surface or the surface that comes into contact with the substrate may be subjected to a surface modification treatment. Examples of the surface modification treatment include treatments that generate a functional group by oxidizing the film surface, such as a corona discharge treatment, a plasma treatment, and a flame treatment; and modification treatments based on a wet process that forms an easily adhesive layer through coating.

### <Packaging material>

The multilayer film may be used as a single film or may be used in a state of being laminated on a substrate, and the method of using the multilayer film as a packaging material is not particularly limited.

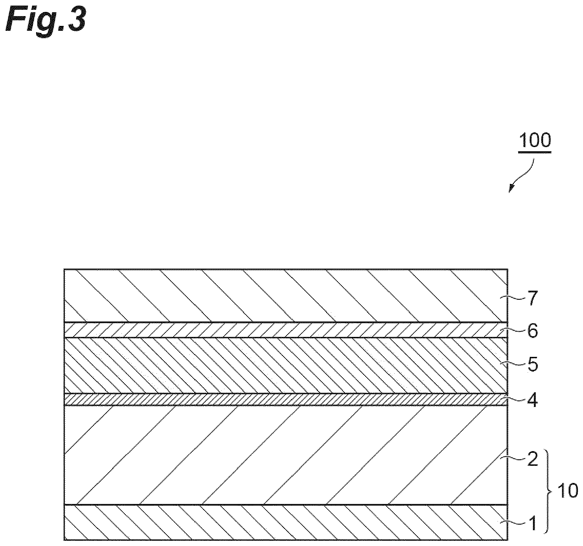

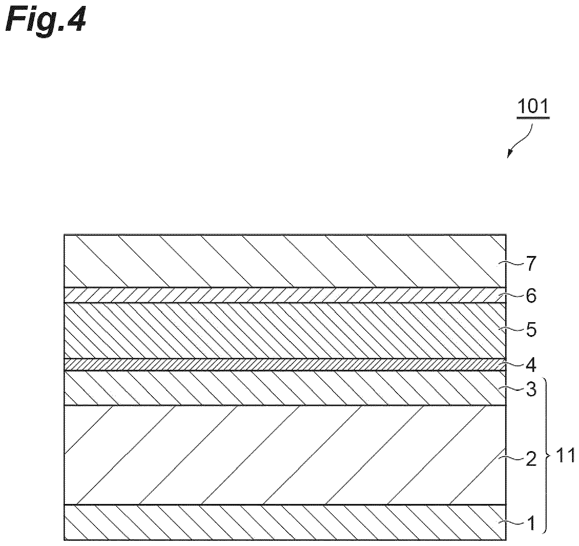

In a case where the multilayer film is used in a state of being laminated on a substrate, the packaging material can include the above-described multilayer film and a substrate. Such a packaging material can be obtained specifically by laminating at least one layer of a substrate such as a biaxially stretched polyamide film (ONy), a biaxially stretched polyester film (PET), a biaxially stretched polypropylene film (OPP), a printed paper, a metal foil (AL foil), or a transparent vapor-deposited film, on the above-described multilayer film, and forming a laminated body. A packaging material obtained by using a biaxially stretched polypropylene film (OPP) as the substrate can be considered as a packaging material made of the same material. FIG. 3 is a cross-sectional view of the packaging material according to an embodiment of the present invention. The packaging material 100 shown in the same figure includes a multilayer film 10, an adhesive layer 4, a transparent vapor-deposited film 5, an adhesive layer 6, and a substrate film 7 in this order. FIG. 4 is a cross-sectional view of the packaging material according to another embodiment of the present invention. The packaging material 101 shown in the same figure includes a multilayer film 11, an adhesive layer 4, a transparent vapor-deposited film 5, an adhesive layer 6, and a substrate film 7 in this order. In this case, the packaging materials 100 and 101 are used such that the multilayer film 10 or 11 side comes as the content side. Regarding the method for producing a laminated body, an ordinary dry lamination method in which the films constituting the laminated body are laminated by using an adhesive can be suitably employed; however, if necessary, a method of directly extrusion laminating the multilayer film on a substrate can also be employed.

A laminated structure of the laminated body can be adjusted as appropriate according to the required characteristics of the package, for example, barrier properties that meet the quality retention period of a food to be packaged, size and impact resistance that can cope with the weight of the contents, visibility of the contents, and the like.

### <Package>

The package may be formed into a bag from the above-described packaging material, and there is no particular limitation on the bag-making style. For example, it is possible to use the above-described packaging material (laminated body) for a flat bag, a three-sided bag, a folded bag, a gusset bag, a standing pouch, a spouted pouch, a beaked pouch, and the like, all of which use the multilayer film as a sealing material.

### <Summary of present embodiment>

### [Invention 1]

A multilayer film including, in the following order:
a first layer, which is a heat seal layer, containing 70 to 10% by mass of a propylene homopolymer (A) and 30 to 90% by mass of a propylene-based resin (B) having a melting point of 132 to 150°C; and
a second layer containing a propylene-ethylene block copolymer (C) and an ethylene-propylene copolymer elastomer (D).

### [Invention 2]

The multilayer film according to Invention 1, in which the second layer contains 90 to 50% by mass of the propylene-ethylene block copolymer (C) and 10 to 50% by mass of the ethylene-propylene copolymer elastomer (D).

### [Invention 3]

The multilayer film according to Invention 1 or 2, in which the thickness of the first layer is 8 to 30% based on the thickness of the multilayer film.

### [Invention 4]

The multilayer film according to Invention 1, in which the multilayer film includes, in the following order:
the first layer;
the second layer; and
a third layer containing a propylene homopolymer (A) and a propylene-based resin (B) having a melting point of 132 to 150°C.

### [Invention 5]

The multilayer film according to Invention 4, in which the total thickness of the first layer and the third layer is 16 to 42% based on the thickness of the multilayer film.

### [Invention 6]

The multilayer film according to any one of Inventions 1 to 5, in which the thickness of the second layer is 20 µm or more.

### [Invention 7]

A packaging material including the multilayer film according to any one of Inventions 1 to 6 and a substrate.

### [Invention 8]

The packaging material according to Invention 7, in which the substrate is a biaxially stretched polypropylene film.

### [Invention 9]

A package formed into a bag from the packaging material according to Invention 7 or 8.

### Examples

Hereinafter, the present invention will be described in detail by using Examples; however, the present invention is not intended to be limited only to the following Examples.

### <Production of laminated film>

### (Example 1)

A propylene homopolymer (A), a propylene-based resin (B), a propylene-ethylene block copolymer (C), and an ethylene-propylene copolymer elastomer (D) as described below were prepared.

### (Propylene homopolymer (A))

A propylene homopolymer having a melting start temperature of 153°C and a melting point (melting peak temperature) of 159°C when subjected to differential scanning calorimetry (JIS K 7121) and having a melt flow rate (MFR: ISO 1133) (temperature 230°C, load 2.16 kg) of 3.0 g/10 minutes.

### (Propylene-based resin (B))

A propylene-ethylene random copolymer having a melting point of 147°C when subjected to differential scanning calorimetry (JIS K 7121) and having an ethylene content of 3.4% by mass.

Measurement of the ethylene content was performed according to the ethylene content quantification method (IR method) as described on pages 412 to 413 of the Polymer Analysis Handbook (May 10, 2013, third impression) edited by the Polymer Analysis Council of the Japan Society for Analytical Science.

### (Propylene-ethylene block copolymer (C))

A propylene-ethylene block copolymer having a melt flow rate (MFR: ISO 1133) (temperature 230°C, load 2.16 kg) of 1.8 g/10 minutes and containing 81.5% by mass of a propylene polymer and an ethylene-propylene copolymer of 18.5% by mass, in which the ethylene content included in the ethylene-propylene copolymer is 36.2% by weight.

### (Ethylene-propylene copolymer elastomer (D))

An ethylene-propylene copolymer elastomer having a melt flow rate (MFR: ISO 1133) (temperature 230°C, load 2.16 kg) of 0.6 g/10 minutes and having a mass ratio of the propylene content and the ethylene content (propylene content/ethylene content) of 2.7.

A resin mixture in which 50% by mass of the propylene homopolymer (A) and 50% by mass of the propylene-based resin (B) were mixed in a pellet state was prepared for forming the first layer.

A resin mixture in which 83% by mass of the propylene-ethylene block copolymer (C) and 17% by mass of the ethylene-propylene copolymer elastomer (D) were mixed in a pellet state was prepared for forming the second layer.

Each of the resin mixtures was supplied to an extruder temperature-regulated to 250°C, kneaded in a molten state, and then laminated using a T-die extruder having a feed block such that the thickness of the first layer was 15 µm, and the thickness of the second layer was 45 µm, and a film of Example 1 was produced.

### (Example 2)

A film of Example 2 was produced in the same manner as in Example 1, except that the mixing proportions of the propylene homopolymer (A) and the propylene-based resin (B) were changed as shown in Table 1.

### (Example 3)

A film of Example 3 was produced in the same manner as in Example 1, except that the mixing proportions of the propylene homopolymer (A) and the propylene-based resin (B) were changed as shown in Table 1.

### (Example 4)

A film of Example 4 was produced in the same manner as in Example 1, except that the following propylene-based resin (B') was used in place of the propylene-based resin (B).

### (Propylene-based resin (B'))

A propylene-ethylene random copolymer having a melting point of 133°C when subjected to differential scanning calorimetry (JIS K 7121) and having an ethylene content of 5.8% by mass.

### (Example 5)

A film of Example 5 was produced in the same manner as in Example 1, except that the mixing proportions of the propylene-ethylene block copolymer (C) and the ethylene-propylene copolymer elastomer (D) were changed as shown in Table 1.

### (Example 6)

A resin mixture in which 50% by mass of the propylene homopolymer (A) and 50% by mass of the propylene-based resin (B) were mixed in a pellet state was prepared for forming the first layer and the third layer.

A resin mixture in which 83% by mass of the propylene-ethylene block copolymer (C) and 17% by mass of the ethylene-propylene copolymer elastomer (D) were mixed in a pellet state was prepared for forming the second layer.

Each of the resin mixtures was supplied to an extruder temperature-regulated to 250°C, kneaded in a molten state, and then laminated using a T-die extruder having a feed block such that the thickness of each of the first layer and the third layer was 10 µm, and the thickness of the second layer was 40 µm, and a film of Example 6 was produced.

### (Example 7)

A film of Example 7 was produced in the same manner as in Example 6, except that the mixing proportions of the propylene homopolymer (A) and the propylene-based resin (B) were changed as shown in Table 1.

### (Example 8)

A film of Example 8 was produced in the same manner as in Example 6, except that the mixing proportions of the propylene homopolymer (A) and the propylene-based resin (B) were changed as shown in Table 1.

### (Example 9)

A film of Example 9 was produced in the same manner as in Example 6, except that the mixing proportions of the propylene-ethylene block copolymer (C) and the ethylene-propylene copolymer elastomer (D) were changed as shown in Table 1.

### (Comparative Example 1)

A film of Comparative Example 1 was produced in the same manner as in Example 1, except that the first layer was formed by using only the propylene homopolymer (A).

### (Comparative Example 2)

A film of Comparative Example 2 was produced in the same manner as in Example 1, except that the mixing proportions of the propylene homopolymer (A) and the propylene-based resin (B) were changed as shown in Table 2.

### (Comparative Example 3)

A film of Comparative Example 3 was produced in the same manner as in Example 1, except that the first layer was formed by using only the propylene-based resin (B).

### (Comparative Example 4)

A film of Comparative Example 4 was produced in the same manner as in Example 1, except that the following propylene-based resin (B") was used in place of the propylene-based resin (B), and the mixing proportions of the propylene homopolymer (A) and the propylene-based resin (B") were changed as shown in Table 2.

### (Propylene-based resin (B"))

A propylene-ethylene random copolymer having a melting point of 131°C when subjected to differential scanning calorimetry (JIS K 7121) and having an ethylene content of 23.7% by mass.

### (Comparative Example 5)

A film of Comparative Example 5 was produced in the same manner as in Example 1, except that the following elastomer resin was used in place of the propylene-based resin (B), and the mixing proportions of the propylene homopolymer (A) and the elastomer resin were changed as shown in Table 2.

### (Elastomer resin)

An elastomer resin, which is an olefin-based elastomer obtained by using a metallocene catalyst and using ethylene as a main monomer and butene-1 as a comonomer, the elastomer resin having a melt flow rate (MFR: ISO 1133) (temperature 190°C, load 2.16 kg) of 3.6 g/10 minutes.

### (Comparative Example 6)

A film of Comparative Example 6 was produced in the same manner as in Example 1, except that the second layer was formed by using only the propylene-ethylene block copolymer (C).

### <Various evaluations>

The following evaluations were performed on the film obtained in each example. The results are shown in Table 1 and Table 2.

### [Evaluation of cold impact resistance]

The impact strength during low-temperature storage of the film obtained in each example was measured by using a film impact tester manufactured by TOYO SEIKI CO., LTD. under the conditions of a temperature of -5°C, a weight of 1.5 J, and a payload size of 1/2 inches.

### [Evaluation of low-temperature sealability]

A laminated body having the following configuration was produced by bonding together a biaxially stretched polyester film (PET) having a thickness of 12 µm, an AL foil having a thickness of 9 µm, a biaxially stretched polyamide film (ONy) having a thickness of 15 µm, and the film (polypropylene-based film) obtained in each example, by an ordinary dry lamination method by using a urethane-based adhesive, and a laminated body having the following configuration was produced. In a case where the film has the first layer, the film was adhered to ONy such that the first layer came as the outer layer side.

### Laminated body configuration: PET/adhesive/AL foil/adhesive/ONy/adhesive/polypropylene-based film

The polypropylene-based films of this laminated body were heat-sealed by using a heat sealer manufactured by TESTER SANGYO CO., LTD., under the conditions of a sealing pressure of 0.2 MPa, a sealing time of 1 second, and a seal width of 5 mm, at a sealing temperature between 140°C and 160°C with an increment of 5°C. After performing heat-sealing at each temperature, the seal portion was cut out into a size of 15 mm in width × 80 mm, and the heat seal strength was measured by using a tensile tester manufactured by SHIMADZU CORPORATION under the conditions of a tensile rate of 300 mm/min. As the temperature at which the heat seal strength reached 40 N/15 mm or greater was lower, it was considered that the low-temperature sealability was more satisfactory.

### [Evaluation of heat resistance]

A bag having a size of 130 mm × 180 mm was produced by using the film obtained in each example, the inner surfaces of the bag were closely adhered to each other without putting contents inside, and a retort treatment was performed at 135°C for 40 minutes. Thereafter, the sealed parts on three sides were cut, the film was peeled off by hand, and a post-retort fusion evaluation was performed. A case in which film peeling was easy was rated as A, a case in which a tacky feeling was felt was rated as B, and a case in which the film was deformed during peeling was rated as C.

**[Table 1]**

| | | | Example | | | | | | | | |
|---|---|---|---|---|---|---|---|---|---|---|---|
| | | | 1 | 2 | 3 | 4 | 5 | 6 | 7 | 8 | 9 |
| Thickness | Entirety | (µm) | 60 | 60 | 60 | 60 | 60 | 60 | 60 | 60 | 60 |
| | First layer | (µm) | 15 | 15 | 15 | 15 | 15 | 10 | 10 | 10 | 10 |
| | Second layer | (µm) | 45 | 45 | 45 | 45 | 45 | 40 | 40 | 40 | 40 |
| | Third layer | (µm) | - | - | - | - | - | 10 | 10 | 10 | 10 |
| First layer composition | Resin (A) | (% by mass) | 50 | 70 | 10 | 50 | 50 | 50 | 70 | 30 | 50 |
| | Resin (B) | (% by mass) | 50 | 30 | 90 | - | 50 | 50 | 30 | 70 | 50 |
| | Resin (B') | (% by mass) | - | - | - | 50 | - | - | - | - | - |
| | Resin (B") | (% by mass) | - | - | - | - | - | - | - | - | - |
| | Elastomer resin | (% by mass) | - | - | - | - | - | - | - | - | - |
| Second layer composition | Resin (C) | (% by mass) | 83 | 83 | 83 | 83 | 67.8 | 83 | 83 | 83 | 67.8 |
| | Resin (D) | (% by mass) | 17 | 17 | 17 | 17 | 32.2 | 17 | 17 | 17 | 32.2 |
| Third layer composition | Resin (A) | (% by mass) | - | - | - | - | - | 50 | 70 | 30 | 50 |
| | Resin (B) | (% by mass) | - | - | - | - | - | 50 | 30 | 70 | 50 |
| Cold impact resistance | | (J/mm) | 9.78 | 9.47 | 8.88 | 8.96 | 10.43 | 9.72 | 9.47 | 8.91 | 11.40 |
| Low-temperature sealability | | (°C) | 150 | 150 | 150 | 150 | 150 | 150 | 150 | 150 | 150 |
| Heat resistance | | - | A | A | A | A | A | A | A | A | A |

**[Table 2]**

| | | | Comparative Example | | | | | |
|---|---|---|---|---|---|---|---|---|
| | | | 1 | 2 | 3 | 4 | 5 | 6 |
| Thickness | Entirety | (µm) | 60 | 60 | 60 | 60 | 60 | 60 |
| | First layer | (µm) | 15 | 15 | 15 | 15 | 15 | 15 |
| | Second layer | (µm) | 45 | 45 | 45 | 45 | 45 | 45 |
| | Third layer | (µm) | - | - | - | - | - | - |
| First layer composition | Resin (A) | (% by mass) | 100 | 80 | - | 70 | 85 | 50 |
| | Resin (B) | (% by mass) | - | 20 | 100 | - | - | 50 |
| | Resin (B') | (% by mass) | - | - | - | - | - | - |
| | Resin (B") | (% by mass) | - | - | - | 30 | - | - |
| | Elastomer resin | (% by mass) | - | - | - | - | 15 | - |
| Second layer composition | Resin (C) | (% by mass) | 83 | 83 | 83 | 83 | 83 | 100 |
| | Resin (D) | (% by mass) | 17 | 17 | 17 | 17 | 17 | - |
| Third layer composition | Resin (A) | (% by mass) | - | - | - | - | - | - |
| | Resin (B) | (% by mass) | - | - | - | - | - | - |
| Cold impact resistance | | (J/mm) | 7.43 | 7.58 | 8.22 | 6.98 | 6.83 | 2.52 |
| Low-temperature sealability | | (°C) | 160 | 160 | 150 | 155 | 155 | 150 |
| Heat resistance | | - | A | A | B | C | C | A |

### Industrial Applicability

The polypropylene-based multilayer film of the present invention achieves heat resistance, cold impact resistance, and low-temperature sealability at a high level and can be suitably used as a sealant film for a retort packaging material.

### Reference Signs List

10: multilayer film, 11: multilayer film, 100: packaging material, 101: packaging material, 1: first layer, 2: second layer, 3: third layer, 4: adhesive layer, 5: transparent vapor-deposited film, 6: adhesive layer, 7: substrate film.

## Claims

1. A multilayer film comprising, in the following order:
a first layer, which is a heat seal layer, containing 70 to 10% by mass of a propylene homopolymer (A) and 30 to 90% by mass of a propylene-based resin (B) having a melting point of 132 to 150°C; and
a second layer containing a propylene-ethylene block copolymer (C) and an ethylene-propylene copolymer elastomer (D).

2. The multilayer film according to claim 1, wherein the second layer contains 90 to 50% by mass of the propylene-ethylene block copolymer (C) and 10 to 50% by mass of the ethylene-propylene copolymer elastomer (D).

3. The multilayer film according to claim 1 or 2, wherein a thickness of the first layer is 8 to 30% based on a thickness of the multilayer film.

4. The multilayer film according to claim 1, wherein the multilayer film comprises, in the following order:
the first layer;
the second layer; and
a third layer containing a propylene homopolymer (A) and a propylene-based resin (B) having a melting point of 132 to 150°C.

5. The multilayer film according to claim 4, wherein a total thickness of the first layer and the third layer is 16 to 42% based on the thickness of the multilayer film.

6. The multilayer film according to claim 1 or 2, wherein a thickness of the second layer is 20 µm or more.

7. A packaging material comprising:
the multilayer film according to claim 1 or 2; and
a substrate.

8. The packaging material according to claim 7, wherein the substrate is a biaxially stretched polypropylene film.

9. A package formed into a bag from the packaging material according to claim 7.
